# FASCICULE DE BREVET EUROPEEN

(11) **EP 3 765 259 B1**
(45) Date de publication et mention de la délivrance du brevet: **04.09.2024**
(21) Numéro de dépôt: 19712161.9
(22) Date de dépôt: 14.03.2019
(51) Int. Cl.: B29C 45/72, B29C 45/07, B29C 45/00, B29C 45/33, B29C 45/26

(54) **SYSTEME DE FABRICATION DE PIECES EN POLYMERE PAR INJECTION ET PROCEDE ASSOCIE**
SYSTEM ZUR HERSTELLUNG VON POLYMERTEILEN DURCH INJEKTION UND ZUGEHÖRIGES VERFAHREN
SYSTEM FOR MANUFACTURING POLYMER PARTS BY INJECTION AND ASSOCIATED METHOD

(30) Priorité: 14.03.2018 FR 1852207
(43) Date de publication de la demande: 20.01.2021
(73) Titulaire: Groupe JBT, 39360 Molinges (FR)
(72) Inventeur: MALFROY, Dominique, 39400 LONGCHAUMOIS (FR); LAVINA, Laurent, 39130 THOIRIA (FR); JANOD, Philippe, 39240 VESCLES (FR); MICHAUD, Rémy, 39170 PRATZ (FR)
(74) Mandataire: Regimbeau
(86) Numéro de dépôt international: PCT/EP2019/056508
(87) Numéro de publication internationale: WO 2019/175361

(56) Documents cités:
- WO-A1-2017/023959
- FR-A5- 2 120 867
- US-A- 3 396 431
- US-B1- 6 569 370

## Description

### DOMAINE TECHNIQUE

Il est question du domaine technique de la fabrication des pièces en polymère par injection.

### ETAT DE LA TECHNIQUE

On connait des procédés de fabrication de pièces en polymère par injection, voir par example le document WO 2017/023959A1.

Ces procédés comprennent une phase d'injection à chaud de la matière dans un moule, une phase de refroidissement dans le moule refroidi, et une phase d'éjection de la pièce par ouverture du moule.

Ces procédés sont couramment utilisés pour des pièces de faible taille et de faible épaisseur, car de telles dimensions permettent la mise en oeuvre de cycles courts, la fabrication simultanée de plusieurs pièces dans des moules à plusieurs cavités, et donc une productivité élevée.

Il serait toutefois souhaitable de pouvoir améliorer encore la productivité des systèmes connus, notamment en réduisant le temps entre le lancement de deux cycles consécutifs, sans pour autant augmenter les défauts parmi les pièces produites.

### PRESENTATION

Un but de l'invention est de pallier au moins un des inconvénients présentés ci-avant.

A cet effet, il est prévu un procédé de fabrication de pièces en polymère tel que défini par la revendication 1. Des mises en oeuvre particulières du procédé selon l'invention sont en outre définies par les revendications suivantes.

La présente divulgation porte également sur un système de fabrication de pièces en polymère, ledit système se trouvant en dehors du domaine de l'invention, et comprenant :
- une partie d'injection de matière,
- un moule mobile entre au moins une position ouverte et une position fermée, le moule comprenant une partie externe de moule,

dans lequel la partie d'injection est adaptée pour injecter de la matière dans le moule fermé de sorte à former au moins une pièce lorsque la partie d'injection est connectée au moule fermé, et
dans lequel le système est adapté pour déplacer la partie d'injection par rapport au moule après injection, la partie externe étant maintenue en contact avec la pièce formée par injection pour refroidir la pièce lors du déplacement de la partie d'injection.

Le système de fabrication de pièces en polymère est avantageusement complété par les caractéristiques suivantes, prises seules ou en une quelconque de leurs combinaisons techniquement possibles :
- le moule reste fermé lors du déplacement de la partie d'injection,
- le moule comprend une partie interne de moule, la partie interne étant maintenue en contact avec la pièce formée par injection pour refroidir la pièce lorsque le moule reste fermé lors du déplacement de la partie d'injection.

### DESSINS

D'autres objectifs, caractéristiques et avantages apparaîtront à la lecture de la description qui suit donnée à titre illustratif et non limitatif en référence aux dessins, parmi lesquels :
- les figures 1 à 5 représentent un exemple différentes positions d'un système ou au cours d'un procédé selon un exemple de mode de réalisation de l'invention,
- les figures 6a et 6b représentent des exemples de pièces issues du système ou du procédé selon un exemple de mode de réalisation de l'invention,
- les figures 7a, 7b et 8 représentent différentes positions d'un système ou au cours d'un procédé selon un exemple de mode de réalisation de l'invention,
- la figure 9 représente un procédé selon un exemple de mode de réalisation de l'invention.

### DESCRIPTION

### Structure générale du système

En référence aux figures, il est décrit un système 1 de fabrication de pièces en polymère. Le système 1 est par exemple un système de fabrication en très grande série.

Par très grande série, on entend par exemple un système de fabrication ayant un temps de cycle inférieur à 10 secondes, chaque temps de cycle correspondant à la fabrication de plusieurs pièces de façon simultanée et permettant la fabrication de séries de pièces d'au moins 1 million par année.

Le système 1 comprend une partie d'injection 11 de matière. La partie d'injection comprend ou est par exemple un injecteur. L'injecteur peut comprendre une unité de plastification, l'unité de plastification comprenant par exemple une vis sans fin permettant la mise en fusion de la matière et/ou un vérin permettant l'injection de la matière. La matière est par exemple une matière plastifiée et/ou en fusion et/ou sous pression. La partie d'injection comprend par exemple une vis sans fin adaptée pour faire circuler des billes de matière.

Le système peut comprendre plusieurs telles parties d'injection 11.

Le système comprend un moule 13. Le moule peut être mobile entre au moins une position ouverte et une position fermée. Le moule 13 peut comprendre une partie externe.

Le système peut comprendre plusieurs tels moules 13.

Le système peut comprendre une unité de commande 17.

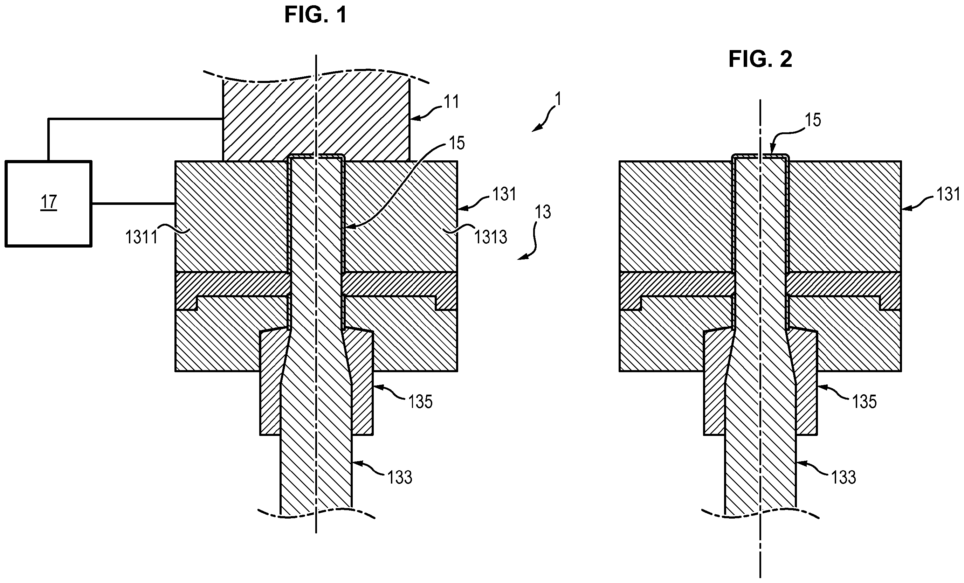

En référence à la figure 1, la partie d'injection 11 est adaptée pour injecter de la matière dans le moule 13 fermé, par exemple de sorte à former au moins une pièce 15 lorsque la partie d'injection 11 est connectée au moule fermé. Le système 1, par exemple l'unité de commande 17, est adapté(e) pour mettre en oeuvre une telle injection.

En référence à la figure 2, le système 1, par exemple l'unité de commande 17, peut être adapté(e) pour déplacer la partie d'injection 11 par rapport au moule 13 après injection, la partie externe du moule 13 étant maintenue en contact avec la pièce formée par injection pour refroidir la pièce lors du déplacement de la partie d'injection 11.

Contrairement à l'art antérieur où le moule s'ouvre au moins partiellement au niveau de la partie externe après la fin de l'injection et dès le début du déplacement de la pièce par rapport à la partie d'injection, il est ainsi possible de prolonger le refroidissement de la pièce la partie externe du moule qui ne reste normalement pas en contact avec la pièce. Ceci permet donc un refroidissement plus efficace et qui peut donc être arrêté plus tôt dans le cycle complet d'injection, écourtant ainsi le temps total du cycle et permettant ainsi la succession plus rapide des cycles. En particulier, ce refroidissement fort dès le départ permet de dégager plus rapidement la ou les partie(s) du moule qui restent normalement longtemps en contact avec la pièce, par exemple une partie interne telle que décrite ci-après, et de permettre de débuter plus tôt le refroidissement de cette ou ces partie(s) de moule en vue du cycle suivant. Cette réduction du temps de cycle permet d'augmenter fortement la productivité du système.

Le déplacement de la partie d'injection 11 est par exemple un dégagement, par exemple un dégagement partiel ou un dégagement total, par exemple un déplacement permettant d'éloigner la partie d'injection 11 du moule 13, par exemple venant interrompre une connexion fluidique entre la partie d'injection 11 et le moule 13.

Le déplacement est par exemple un déplacement de la partie d'injection 11, le moule 13, en particulier la partie externe et/ou la partie interne du moule, restant fixe(s), ou un déplacement du moule 13, en particulier de la partie externe et/ou de la partie interne du moule, la partie d'injection 11 restant fixe, ou des déplacements du moule 13, en particulier de la partie externe et/ou de la partie interne du moule, et de la partie d'injection 11 de sorte qu'il y ait mouvement relatif entre le moule 13, par exemple la partie externe, et la partie d'injection 11.

### Moule

En référence à la figure 2, le système 1, par exemple l'unité de commande 17, peut être adapté(e) pour déplacer la partie d'injection 11 par rapport au moule 13 après injection, le moule 13 restant fermé lors du déplacement de la partie d'injection 11.

Contrairement à l'art antérieur où le moule s'ouvre au moins partiellement au niveau de la partie externe après la fin de l'injection et dès le début du déplacement de la pièce par rapport à la partie d'injection, il est ainsi possible de prolonger le refroidissement de la pièce par la ou les partie(s) du moule qui ne reste(nt) normalement pas en contact avec la pièce. Ceci permet donc un refroidissement plus efficace et qui peut donc être arrêté plus tôt dans le cycle complet d'injection, écourtant ainsi le temps total du cycle et permettant ainsi la succession plus rapide des cycles. En particulier, ce refroidissement fort dès le départ permet de dégager plus rapidement la ou les partie(s) du moule qui restent normalement longtemps en contact avec la pièce, et de permettre de débuter plus tôt le refroidissement de cette partie de moule en vue du cycle suivant. Cette réduction du temps de cycle permet d'augmenter fortement la productivité du système.

Le moule 13 peut comprendre une ou plusieurs partie(s), par exemple plusieurs parties permettant de former la ou les empreintes du moule, c'est-à-dire la ou les partie(s) moulante(s) du moule. Chaque partie moulante est par exemple chacune en contact avec au moins une autre partie moulante lorsque le moule est fermé, par exemple de sorte que chaque partie moulante est en contact avec chaque autre partie moulante, directement ou indirectement par le biais d'une ou plusieurs autres partie(s) moulante(s). Le moule 13 est par exemple un moule multi-cavités.

Le moule est par exemple un moule métallique.

Le moule 13 peut comprendre la partie externe 131 de moule. La partie externe 131 est par exemple adaptée pour s'étendre autour de la pièce 15 et/ou délimiter et/ou définir une surface externe de la pièce 15 dans le moule, par exemple après injection.

Le système peut comprendre plusieurs telles parties externes 131.

Par surface externe, on entend une surface tournée vers l'extérieur par rapport à la pièce. Par surface interne, on entend une tournée vers l'intérieur de la pièce.

La partie externe 131 est par exemple maintenue en contact avec la pièce 15 formée par injection, pour refroidir la pièce 15 lorsque le moule 13 reste fermé lors du déplacement de la partie d'injection. Le système 1, par exemple l'unité de commande 17, est par exemple adapté(e) pour mettre en oeuvre un tel maintien en contact.

Il est ainsi possible de prolonger le refroidissement initial de la pièce 15 par la partie externe 131. Ce refroidissement est d'autant plus efficace que la surface de contact entre la partie externe 131 et la pièce 15 est importante, et/ou que la partie externe131, de par son positionnement vis-à-vis de la pièce 15, est refroidie de manière plus efficace et/ou disperse plus aisément la chaleur issue de la pièce 15. Il en résulte un refroidissement initial plus efficace, et donc une solidification plus rapide, permettant ainsi un arrêt du refroidissement plus tôt dans le cycle, au moins par une ou plusieurs autre(s) partie(s) du moule, permettant ainsi leur propre refroidissement en vue du prochain cycle.

La partie externe 131 comprend par exemple plusieurs sous-parties, par exemple deux sous-parties 1311 et 1313, une première sous-partie 1311 et une deuxième sous-partie 1313, par exemple mobiles l'une par rapport à l'autre. Les sous-parties sont par exemple des tiroirs ou des coquilles.

La partie externe 131 peut comprendre des protrusions permettant la formation de contre-dépouilles et/ou d'orifices de la pièce 15. Le moule 13 est par exemple configuré de sorte que les protrusions de la partie externe 131 sont en contact avec une partie interne 133 telle que décrite ci-après lorsque le moule 13 est fermé.

La partie externe 131 peut comprendre un dispositif de refroidissement. Le dispositif de refroidissement comprend par exemple un circuit refroidissement, par exemple permettant la circulation d'un fluide de refroidissement, le circuit de refroidissement pouvant comprendre un ou plusieurs canaux de refroidissement, un ou plusieurs de l'un ou plusieurs canaux de refroidissement s'étendant par exemple au sein ou autour de la partie externe 131. Le dispositif de refroidissement peut comprendre des moyens de refroidissement par conduction, par exemple un caloduc.

Le moule 13 peut comprendre une partie interne 133 de moule. La partie interne 133 forme par exemple un noyau ou une broche. La partie interne est par exemple adaptée pour s'étendre dans et/ou former et/ou délimiter et/ou définir une cavité de la pièce 15 dans le moule, par exemple après injection. La partie interne 133 est par exemple adaptée pour s'étendre au sein de la pièce 15 et/ou délimiter et/ou définir une surface interne de la pièce 15 dans le moule, par exemple après injection.

Le système peut comprendre plusieurs telles parties internes 133.

La partie interne 133 et la partie externe 131 sont par exemple en contact l'une avec l'autre lorsque le moule 13 est fermé.

La partie interne 133 est par exemple maintenue en contact avec la pièce 15 formée par injection pour refroidir la pièce 15 lorsque le moule 13 reste fermé lors du déplacement de la partie d'injection 11. Le système 1, par exemple l'unité de commande 17, est par exemple adapté(e) pour mettre en oeuvre un tel maintien en contact.

Il est ainsi possible, dans une phase initiale, d'effectuer un refroidissement prolongé à la fois par la partie interne et par la partie externe, de sorte à refroidir efficacement la pièce et à permettre ensuite le dégagement de la partie interne à un stade plus précoce que dans l'art antérieur.

La partie interne 133 peut comprendre un dispositif de refroidissement. Le dispositif de refroidissement peut comprendre des moyens de refroidissement par conduction, par exemple un caloduc. La partie interne 133, par exemple le noyau ou la broche, peut comprendre en son sein un noyau conducteur thermique formant caloduc.

La partie externe 131 et la partie interne 133 sont par exemple configurées pour être mises en contact lorsque le moule est fermé, par exemple au niveau d'une surface de connexion dite plan de joint.

Le système 1, par exemple l'unité de commande 17, est par exemple configuré(e) de sorte à permettre l'ouverture du moule 13, par exemple postérieurement au déplacement de la partie d'injection 11. Le système 1, par exemple l'unité de commande 17, est par exemple adapté(e) pour mettre en oeuvre une telle ouverture.

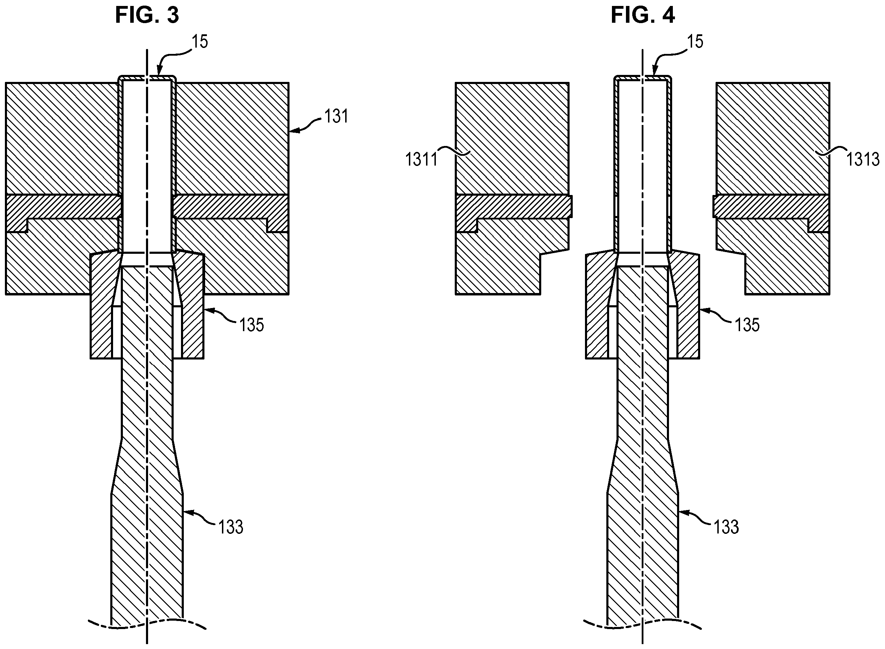

En référence à la figure 3, l'ouverture du moule 13 comprend par exemple le dégagement, par exemple un dégagement complet ou un dégagement partiel d'une partie interne 133 du moule, par exemple de sorte à permettre le refroidissement de la partie interne 133. L'ouverture du moule 13 comprend par exemple le dégagement de la partie externe 131 du moule, par exemple lorsque la pièce 15 a atteint un état où la partie externe 131 et/ou la partie interne 133 ne sont plus nécessaires pour le maintien en forme de la pièce.

Le dégagement complet ou partiel de la partie interne 133 comprend par exemple la désolidarisation de la partie interne 133 et de la partie externe 131 l'une de l'autre, par exemple le recul de la partie interne 133, par exemple la désolidarisation de la partie interne et de la pièce 15.

Le dégagement de la partie externe 131 comprend par exemple le recul de la partie externe 131. Le dégagement de la partie externe 131 comprend par exemple le dégagement par exemple le recul, par exemple l'éloignement relatif, des sous-parties 1311 et 1313.

Le système 1 peut comprendre une cale, par exemple une cale mobile, adaptée pour être maintenue en contact avec la pièce 15, par exemple de sorte à maintenir la pièce 15 en position, par exemple de sorte à éviter que la pièce 15 ne reste en contact avec la partie externe 131, par exemple ne reste en contact avec la sous partie 1311 et/ou la sous-partie 1313. Il est ainsi possible d'améliorer encore le dégagement de la partie externe 131. La cale mobile est par exemple configurée pour rester en contact avec la pièce 15 jusqu'à ce que la majorité, par exemple plus de 50% de la surface externe de la pièce 15 qui est en contact avec la partie externe 131 lorsque le moule 13 est en position fermée, ne soit plus en contact avec la partie externe 131.

Le système 1, par exemple l'unité de commande 17, est par exemple configuré(e) de sorte que le dégagement de la partie externe 131 débute en même temps que ou postérieurement au dégagement de la partie interne 133. Ainsi, par rapport à l'art antérieur, le dégagement de la partie interne 133 a lieu plus précocement dans le cycle, ce qui permet à la partie interne 133 de débuter ou d'effectuer son propre refroidissement plus tôt et plus efficacement, et donc de l'achever plus tôt dans le cycle, permettant au cycle d'être écourté par rapport à l'art antérieur et donc au nouveau cycle de commencer plus tôt.

En référence à la figure 4, le système 1, par exemple l'unité de commande 17, est par exemple configuré(e) de sorte que le dégagement de la partie externe 131 débute postérieurement au dégagement de la partie interne 133, par exemple de sorte à permettre le refroidissement de la partie interne pendant que la pièce continue d'être refroidie par la partie externe 131 qui est maintenue en contact avec la pièce 15, par exemple postérieurement au début du dégagement de la partie interne 133 ou une fois que la partie interne 133 est entièrement dégagée de la pièce 15. Le dégagement de la partie externe 131 est donc par exemple asservi de sorte qu'elle ne dépend plus de l'ouverture simultanée du moule par dégagement de la partie interne 133. Il est ainsi possible d'avancer encore le début du refroidissement de la partie interne 133, le refroidissement de la pièce 15 étant alors laissé à la partie externe 131. Une telle configuration vient contredire les incitations de l'art antérieur qui enseigne d'effectuer le contraire, c'est-à-dire de dégager au préalable la partie externe et de maintenir plus longtemps la partie interne en place, par crainte que la pièce ne maintienne pas sa forme - or ici le maintien initial de la partie externe lors du déplacement de la partie d'injection, et le fait que la partie interne a pu être suffisamment refroidie lors du cycle précédent, permettent un refroidissement initial suffisamment efficace de la pièce pour ne la maintenir sans la partie interne.

Le dégagement de la partie interne 133 et/ou de la partie externe 131 est par exemple mis en oeuvre par déplacement de la partie interne 133, la partie externe 131 restant fixe, ou un déplacement de la partie externe 131, la partie interne 133 restant fixe, ou des déplacements de la partie externe 131 et de la partie interne 133 de sorte qu'il y ait mouvement relatif entre la partie externe 131 et la partie interne 133.

Le système 1, par exemple l'unité de commande 17, est par exemple configuré(e) de sorte que le dégagement de la partie externe 131 est plus lent que le dégagement de la partie interne 133. Il est ainsi possible de réaliser le dégagement de la partie externe 131 comme de la partie interne 133 relativement tôt tout en maintenant la partie externe 131 plus proche de la pièce de sorte à limiter et/ou éviter une déformation non désirée de la pièce de par le maintien plus long de la pièce par la partie externe 131, la partie interne 133 pouvant néanmoins débuter son refroidissement.

La vitesse de dégagement de la partie externe 131 peut ainsi être plus lente que la vitesse de dégagement de la partie interne 133. La vitesse de dégagement de la partie externe 131 peut être inférieure à la vitesse de dégagement de la partie interne 133 d'au moins 50%, par exemple d'au moins 60 %, par exemple d'au plus 90%. La vitesse de dégagement de la partie externe 131 peut être comprise entre ½ et 1/7 de la vitesse de dégagement de la partie interne 133, par exemple entre 1/3 et 1/5. La vitesse de dégagement est par exemple la vitesse d'éloignement entre la partie externe 131 ou la partie interne 133, et la pièce 15.

La vitesse de dégagement de la partie externe 131, respectivement interne 133, est par exemple une vitesse moyenne de dégagement de la partie externe 131, respectivement interne 133, par exemple pour toute l'étape de dégagement de la partie externe 131, respectivement interne 133. Alternativement ou en complément, la vitesse de dégagement est par exemple la vitesse de dégagement instantanée.

De préférence, lorsque le système 1, par exemple l'unité de commande 17, est configuré(e) de sorte que le dégagement de la partie externe 131 est plus lent que le dégagement de la partie interne 133, comme décrit plus haut, le système 1, par exemple l'unité de commande 17, est par exemple configuré(e) de sorte que le dégagement de la partie externe 131 débute en même temps que le dégagement de la partie interne 133. Il est ainsi possible de limiter et/ou d'éviter une déformation non désirée de la pièce de par le maintien plus long de la pièce par la partie externe 131, la partie interne 133 pouvant néanmoins débuter son refroidissement.

Le système 1, par exemple le moule 13, peut comprendre une partie d'éjection 135.

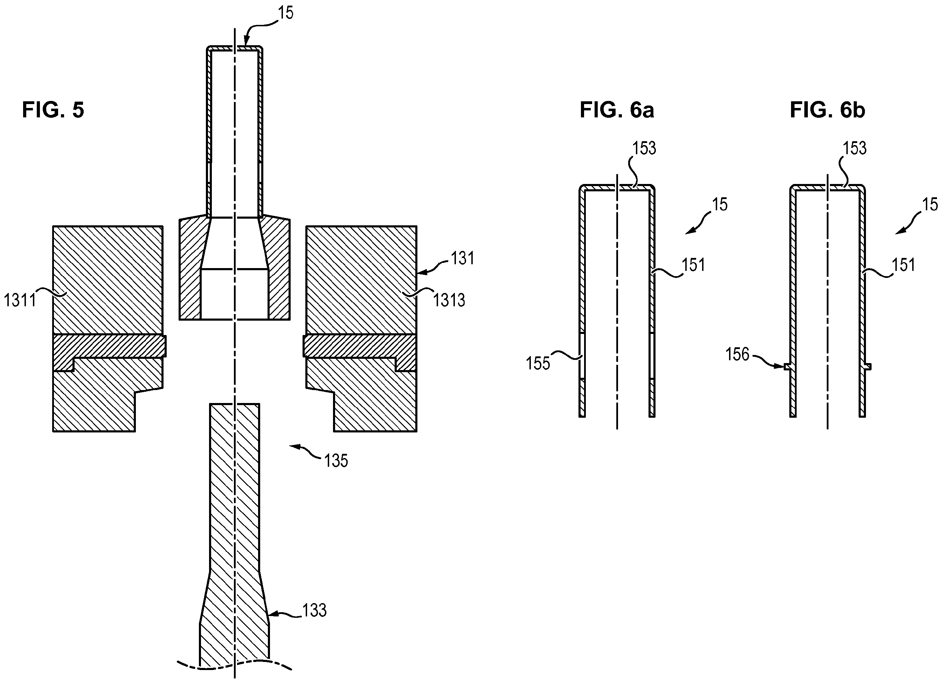

En référence à la figure 5, la partie d'éjection 135 est par exemple adaptée pour participer à l'éjection de la pièce en fin de cycle. L'éjection est par exemple réalisée par appui de la pièce contre la partie d'éjection 135, qui est par exemple mise en mouvement. Le système 1, par exemple l'unité de commande 17, est par exemple configuré(e) de sorte à mettre en oeuvre l'éjection postérieurement au dégagement de la partie interne 133 et/ou de la partie externe.

La partie d'éjection 135 fait par exemple partie du moule 13. La partie d'éjection 135 est par exemple une partie moulante.

La partie d'éjection 135 a par exemple une forme annulaire ou tubulaire. La partie d'éjection 135 est par exemple une cale.

Le système peut comprendre plusieurs telles parties d'éjection 135.

### Pièce

En référence aux figures 6a et 6b, des exemples de pièce 15 sont décrits.

La pièce 15 a par exemple au moins une paroi fine. La pièce 15 a par exemple toutes ses parois fines. Par fine, on entend par exemple une épaisseur inférieure à 3 mm, en particulier inférieure à 2 mm, en particulier inférieure ou égale à 1,5 mm, en particulier supérieure ou égale à 0,5 mm, en particulier comprise entre 0,5 mm et 1,5 mm.

La pièce 15 a par exemple une longueur supérieure à 3 mm, par exemple supérieure ou égale à 5 mm, par exemple inférieure à 12 mm, par exemple inférieure ou égale à 10 mm, par exemple comprise entre 5 et 10 mm.

La pièce 15 a ou comprend par exemple une forme tubulaire. La pièce 15 comprend par exemple au moins une partie en forme de tube. La pièce comprend par exemple au moins une paroi latérale 151, par exemple définissant un tube, par exemple une paroi cylindrique. La pièce comprend par exemple une paroi extrémale 153 disposée à une extrémité de la paroi latérale, par exemple de sorte à former un fond de la pièce.

La pièce comprend par exemple un ou plusieurs orifice(s) 155, par exemple un ou plusieurs orifice(s) traversant(s), par exemple des orifices latéraux, par exemple disposé(s) au niveau de la paroi latérale 151. Les orifices 155 sont par exemple disposés à une même hauteur de la paroi latérale 151, par exemple opposés deux à deux.

La pièce comprend par exemple un ou plusieurs relief(s) 156, par exemple une ou plusieurs contredépouille(s), par exemple une ou plusieurs protrusion(s), par exemple un ou plusieurs godron(s), par exemple des reliefs latéraux, par exemple disposé(s) au niveau de la paroi latérale 151. Le ou les relief(s) 156 est ou sont par exemple disposé(s) à une même hauteur de la paroi latérale 151, par exemple au niveau d'un pourtour de la pièce. Le relief peut ainsi former un relief annulaire en protrusion s'étendant sur 360°.

La pièce 15 comprend ou est constituée d'au moins un matériau thermoplastique ou polymère. Le matériau thermoplastique et/ou polymère est ou comprend par exemple un polymère thermoplastique amorphe, ayant une structure non organisée, par exemple du polystyrène (PS), du poly(méthacrylate de méthyle) (PMMA), du polycarbonate (PC) et/ou un élastomère thermoplastique (TPE), par exemple un élastomère thermoplastique à base de copolymère styrénique (TPS), par exemple du polystyrène-b-poly(éthylène-butylène)-b-polystyrène (SEBS). Le matériau thermoplastique et/ou polymère est ou comprend par exemple un polymère thermoplastique cristallin, ayant une structure organisée, par exemple dans laquelle les chaînes de polymères sont alignées, par exemple du polypropylène (PP) et/ou du polyéthylène (PE).

La pièce 15 est par exemple destinée au domaine pharmaceutique ou médical, par exemple à une utilisation pharmaceutique ou médicale, la pièce étant par exemple un protecteur d'aiguille, par exemple un tel protecteur d'une seringue préremplie et/ou d'un stylo d'auto-injection de médicament. La pièce est par exemple destinée au domaine et/ou à une utilisation cosmétique, la pièce étant par exemple un bouchon ou un tube. La pièce est par exemple destinée au domaine et/ou à une utilisation alimentaire, la pièce étant par exemple un bouchon. La pièce est par exemple destinée au domaine et/ou à une utilisation propre à la grande consommation, la pièce étant par exemple une partie d'un stylo, par exemple un bouchon de stylo.

En particulier, dans les domaines où la contamination des pièces en termes particulaires et/ou microbiologiques doit être maîtrisée, le système et le procédé décrits ici permettent de limiter le plus possible le temps d'exposition des pièces et le nombre de manipulation lors de leur production.

Le système 1 peut permettre la fabrication de plusieurs pièces en parallèle ou en série. Dans ce cas, le système peut comprendre plusieurs parties d'injection 11 et/ou plusieurs moules 13 et/ou plusieurs parties d'éjection et/ou le moule 13 peut comprendre plusieurs parties internes 133 et/ou plusieurs parties externes 131 et/ou plusieurs parties d'éjection 135, chacun(e) fonctionnant comme décrit ici vis-à-vis d'une pièce 15 donnée.

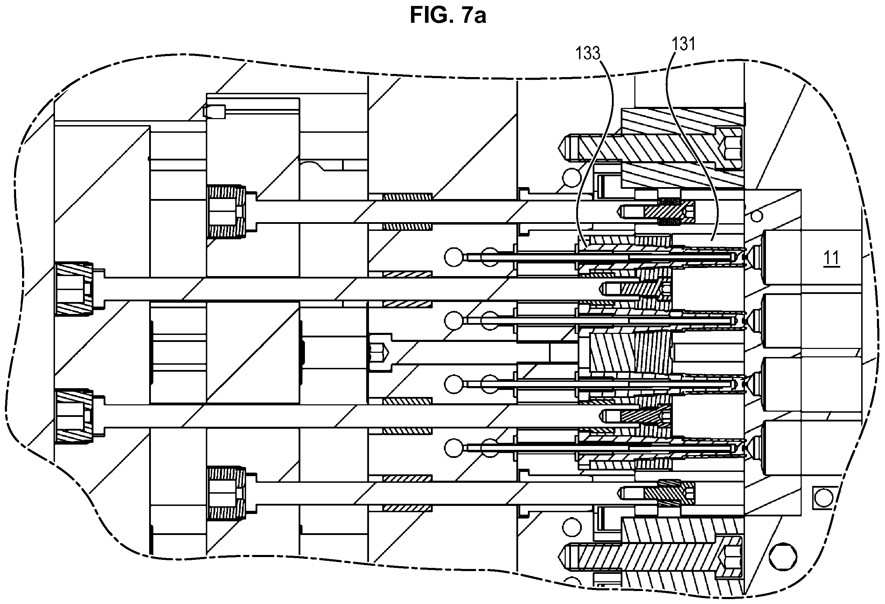

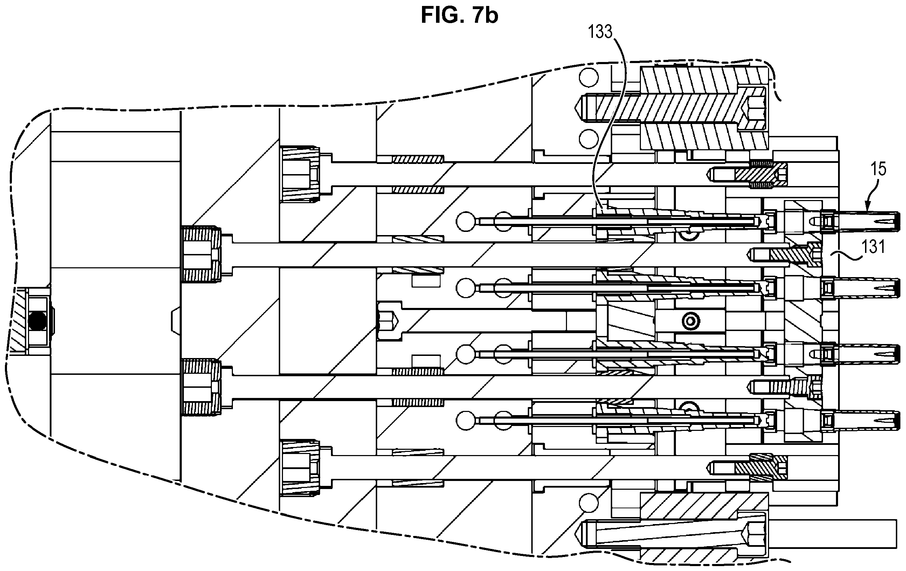

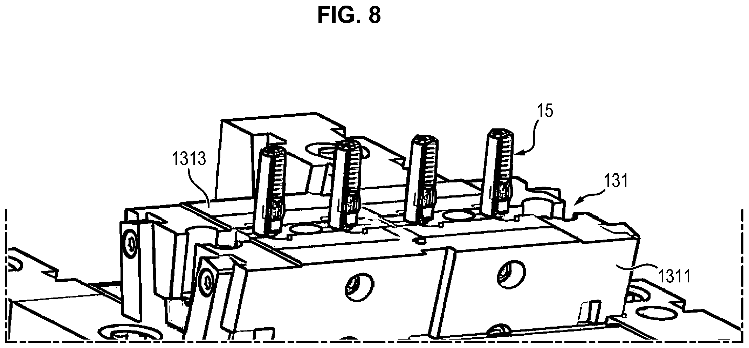

En référence aux figures 7a, 7b et 8, il est décrit un système 1 tel décrit ici, par exemple pour la mise en oeuvre d'un procédé tel que décrit ci-après. Le système 1 peut comprendre une pluralité de parties d'injection 11, par exemple connectées entre elles, par exemple fixes l'une par rapport à l'autre. Le système 1 peut comprendre une pluralité de parties internes 133, par exemple connectées entre elles, par exemple fixes l'une par rapport à l'autre. une pluralité de parties externes 131, par exemple une pluralité de paires de sous-parties 1311 et 1313, les premières sous-parties 1311 étant fixes l'une par rapport à l'autre et/ou les deuxièmes sous-parties 1313 étant fixes l'une par rapport à l'autre.

### Unité de commande

L'unité de commande 17 comprend par exemple des moyens de calcul et/ou de traitement d'information, par exemple un processeur. L'unité de commande 17 comprend par exemple un mémoire, par exemple connectée au processeur, morte et/ou vive, stockant des instructions permettant les configurations prévues du système et pour lesquels la structure du système est configurée et/ou pour stocker les instructions correspondant au procédé décrit ci-après.

### Procédé

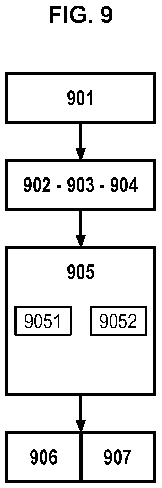

En référence à la figure 9, il est décrit un procédé de fabrication de pièces en polymère.

Le procédé est par exemple mis en oeuvre au moyen système 1 de fabrication de pièces en polymère, par exemple du système 1 décrit ci-avant.

Les caractéristiques présentées vis-à-vis du système peuvent donc s'appliquer au procédé et vice versa. En particulier des caractéristiques du système peuvent s'appliquer au procédé, par exemple sous la forme d'étapes, et vice versa.

Le procédé peut comprendre une étape 901 d'injection de matière par une partie d'injection, par exemple la partie d'injection 11, dans un moule, par exemple le moule 13, fermé, par exemple de sorte à former au moins une pièce 15, la partie d'injection étant connectée au moule fermé. Une telle étape est par exemple illustrée figure 1.

L'injection est par exemple une injection à chaud, par exemple une injection de matière plastifiée et/ou en fusion.

Le procédé peut comprendre, après injection, une étape 902 de déplacement de la partie d'injection par rapport au moule, une partie externe du moule 13 étant maintenue en contact avec la pièce formée par injection pour refroidir la pièce lors du déplacement de la partie d'injection. Une telle étape est par exemple illustrée figure 2.

Le déplacement de la partie d'injection 11 est par exemple un dégagement, par exemple un dégagement partiel ou un dégagement total, par exemple un déplacement permettant d'éloigner la partie d'injection 11 du moule 13, par exemple venant interrompre une connexion fluidique entre la partie d'injection 11 et le moule 13.

Le déplacement est par exemple un déplacement de la partie d'injection 11, le moule 13, en particulier la partie externe et/ou la partie interne du moule, restant fixe(s), ou un déplacement du moule 13, en particulier de la partie externe et/ou de la partie interne du moule, la partie d'injection 11 restant fixe, ou des déplacements du moule 13, en particulier de la partie externe et/ou de la partie interne du moule, et de la partie d'injection 11 de sorte qu'il y ait mouvement relatif entre le moule 13, par exemple la partie externe, et la partie d'injection 11.Le déplacement est par exemple un recul, par exemple un recul de la partie externe et/ou du moule 13, entraînant la pièce, par rapport à la partie d'injection 11, qui est par exemple fixe.

Contrairement à l'art antérieur où le moule s'ouvre au moins partiellement au niveau de la partie externe après la fin de l'injection et dès le début du déplacement de la pièce par rapport à la partie d'injection, il est ainsi possible de prolonger le refroidissement par la partie externe du moule qui ne reste normalement pas en contact avec la pièce. Ceci permet donc un refroidissement plus efficace et qui peut donc être arrêté plus tôt dans le cycle complet d'injection, écourtant ainsi le temps total du cycle et permettant ainsi la succession plus rapide des cycles. En particulier, ce refroidissement fort dès le départ permet de dégager plus rapidement la ou les partie(s) du moule qui restent normalement longtemps en contact avec la pièce, par exemple une partie interne telle que décrite ci-après, et de permettre de débuter plus tôt le refroidissement de cette ou ces partie(s) de moule en vue du cycle suivant, donc d'augmenter le temps de refroidissement effectif de ces parties entre deux cycles. Cette réduction du temps de cycle permet d'augmenter fortement la productivité du procédé.

Le procédé peut comprendre, après injection, une étape 902 de déplacement de la partie d'injection par rapport au moule, le moule restant fermé et/ou une partie externe du moule 13 étant maintenue en contact avec la pièce formée par injection. Une telle étape est par exemple illustrée figure 2.

Le déplacement est par exemple un déplacement de la partie d'injection 11, le moule 13 restant fixe, ou un déplacement du moule 13, la partie d'injection 11 restant fixe, ou des déplacements du moule 13 et de la partie d'injection 11 de sorte qu'il y ait mouvement relatif entre le moule 13 et la partie d'injection 11. Le déplacement est par exemple un recul, par exemple un recul du moule 13, entraînant la pièce, par rapport à la partie d'injection 11, qui est par exemple fixe.

Contrairement à l'art antérieur où le moule s'ouvre au moins partiellement après la fin de l'injection et dès le début du déplacement de la pièce par rapport à la partie d'injection, il est ainsi possible de prolonger le refroidissement de la pièce par la ou les partie(s) du moule qui ne reste(nt) normalement pas en contact avec la pièce. Ceci permet donc un refroidissement plus efficace et qui peut donc être arrêté plus tôt dans le cycle complet d'injection, écourtant ainsi le temps total du cycle et permettant ainsi la succession plus rapide des cycles. En particulier, ce refroidissement fort dès le départ permet de dégager plus rapidement la ou les partie(s) du moule qui restent normalement longtemps en contact avec la pièce, et de permettre de débuter plus tôt le refroidissement de cette partie de moule en vue du cycle suivant, donc d'augmenter le temps de refroidissement effectif de ces parties entre deux cycles. Cette réduction du temps de cycle permet d'augmenter fortement la productivité du procédé.

Le moule peut comprendre la partie externe de moule, par exemple la partie externe 131.

Le procédé peut comprendre une étape 903 de maintien de la partie externe 131 en contact avec la pièce 15 formée par injection, par exemple lors de l'étape 901, pour refroidir la pièce 15 lorsque le moule 13 reste fermé lors du déplacement de la partie d'injection 11 de l'étape 902.

Il est ainsi possible de prolonger le refroidissement initial de la pièce 15 par la partie externe 131. Ce refroidissement est d'autant plus efficace que la surface de contact entre la partie externe 131 et la pièce 15 est importante, et/ou que la partie externe131, de par son positionnement vis-à-vis de la pièce 15, est refroidie de manière plus efficace et/ou disperse plus aisément la chaleur issue de la pièce 15. Il en résulte un refroidissement initial plus efficace, permettant ainsi un arrêt du refroidissement plus tôt dans le cycle, au moins par une ou plusieurs autre(s) partie(s) du moule, permettant ainsi leur propre refroidissement en vue du prochain cycle.

Le procédé peut comprendre une étape 905 d'ouverture du moule 13. L'ouverture du moule 13 est par exemple au moins partiellement réalisée alors que la solidification de la pièce 15 n'est pas achevée, par exemple alors que la solidification en surface de la pièce n'est pas achevée, par exemple avant qu'il ne soit possible de manipuler la pièce, par exemple par la partie d'éjection.

L'étape 905 peut comprendre une étape 9051 de dégagement, par exemple de dégagement partiel ou de dégagement total, d'une partie interne du moule, par exemple de la partie interne 133, par exemple de sorte à permettre le refroidissement de la partie interne 133. Une telle étape est par exemple illustrée figure 3.

L'étape 9051 est par exemple mise en oeuvre, ou débute, avant le dégagement de la partie externe 131. Ainsi, contrairement à l'art antérieur, l'ouverture peut avoir lieu alors que la pièce n'est que faiblement solidifiée, alors que sa manipulation n'est pas encore possible.

L'étape 905 peut comprendre une étape 9052 de dégagement de la partie externe 131. Une telle étape est par exemple illustrée figure 4.

L'étape 9052 peut comprendre la mise en contact de la pièce 15 par la cale, par exemple la cale mobile, par exemple de sorte à maintenir la pièce 15 en position, par exemple de sorte à éviter que la pièce 15 ne reste en contact avec la partie externe 131, par exemple ne reste en contact avec la sous partie 1311 et/ou la sous-partie 1313. Il est ainsi possible d'améliorer encore le dégagement de la partie externe 131. La cale mobile peut rester en contact avec la pièce 15 jusqu'à ce que la majorité, par exemple plus de 50% de la surface externe de la pièce 15 qui est en contact avec la partie externe 131 lorsque le moule 13 est en position fermée, ne soit plus en contact avec la partie externe 131.

Le procédé est par exemple tel que l'étape 9052 de dégagement de la partie externe 131 débute en même temps que l'étape 9051 de dégagement de la partie interne 133, ou débute postérieurement à l'étape 9051 de dégagement de la partie interne 133. Ainsi, par rapport à l'art antérieur, le dégagement de la partie interne 133 a lieu plus précocement dans le cycle, ce qui permet à la partie interne 133 de débuter ou d'effectuer son propre refroidissement plus tôt et plus efficacement, et donc de l'achever plus tôt dans le cycle, permettant au cycle d'être écourté par rapport à l'art antérieur et donc au nouveau cycle de commencer plus tôt. Le dégagement de la partie interne 133 comprend par exemple le recul de la partie interne par rapport à la pièce 15.

Le procédé est par exemple tel que l'étape 9052 de dégagement de la partie externe 131 débute postérieurement à l'étape 9051 de dégagement de la partie interne 133, par exemple de sorte à permettre le refroidissement de la partie interne 133 pendant que la pièce 15 continue d'être refroidie par la partie externe 131. En particulier, l'étape 9052 de dégagement de la partie externe 131 peut débuter postérieurement au début du dégagement de la partie interne 133 ou une fois que la partie interne 133 est entièrement dégagée de la pièce 15. Il est ainsi possible d'avancer encore le début du refroidissement de la partie interne 133, le refroidissement de la pièce 15 étant alors laissé à la partie externe 131. Il est ainsi possible de maximaliser le temps de contact de la surface extérieure de la pièce avec la partie externe 131, c'est-à-dire maximaliser le refroidissement via la plus grande surface d'échange au moyen de la partie moulante la mieux refroidie. Une telle configuration vient contredire les incitations de l'art antérieur qui enseigne d'effectuer le contraire, c'est-à-dire de dégager au préalable la partie externe et de maintenir plus longtemps la partie interne en place, par crainte que la pièce ne maintienne pas sa forme - or ici le maintien initial de la partie externe lors du déplacement de la partie d'injection, et le fait que la partie interne a pu être suffisamment refroidie lors du cycle précédent, permettent un refroidissement initial suffisamment efficace de la pièce pour ne la maintenir sans la partie interne.

Ainsi l'éjection peut avoir lieu le plus tard possible sans retarder le cycle, en maximisant le refroidissement de la pièce 15 par la partie externe 131 tout en permettant le refroidissement en parallèle la partie interne 133.

L'étape 9052 de dégagement de la partie externe 131 peut être plus lente que l'étape de dégagement de la partie interne 133. Il est ainsi possible de réaliser le dégagement de la partie externe 131 comme de la partie interne 133 relativement tôt tout en maintenant la partie externe 131 plus proche de la pièce de sorte à limiter et/ou éviter une déformation non désirée de la pièce de par le maintien plus long de la pièce par la partie externe 131, la partie interne 133 pouvant néanmoins débuter son refroidissement.

La vitesse de dégagement de la partie externe 131 peut ainsi être plus lente que la vitesse de dégagement de la partie interne 133. La vitesse de dégagement de la partie externe 131 peut être inférieure à la vitesse de dégagement de la partie interne 133 d'au moins 50%, par exemple d'au moins 60 %, par exemple d'au plus 90%. La vitesse de dégagement de la partie externe 131 peut être comprise entre ½ et 1/7 de la vitesse de dégagement de la partie interne 133, par exemple entre 1/3 et 1/5. La vitesse de dégagement est par exemple la vitesse d'éloignement entre la partie externe 131 ou la partie interne 133, et la pièce 15.

La vitesse de dégagement de la partie externe 131, respectivement interne 133, est par exemple une vitesse moyenne de dégagement de la partie externe 131, respectivement interne 133, par exemple pour toute l'étape de dégagement de la partie externe 131, respectivement interne 133. Alternativement ou en complément, la vitesse de dégagement est par exemple la vitesse de dégagement instantanée.

De préférence, lorsque l'étape 9052 de dégagement de la partie externe 131 est plus lente que l'étape de dégagement de la partie interne 133, comme décrit plus haut, l'étape 9052 de dégagement de la partie externe 131 peut débuter en même temps que l'étape 9051 de dégagement de la partie interne 133. Il est ainsi possible de limiter et/ou d'éviter une déformation non désirée de la pièce de par le maintien plus long de la pièce par la partie externe 131, la partie interne 133 pouvant néanmoins débuter son refroidissement.

Le procédé peut comprendre une étape 906 d'éjection de la pièce 15 postérieurement au dégagement de la partie interne 133 et au dégagement de la partie externe 131. L'éjection a par exemple lieu par appui d'une partie d'éjection du système, par exemple du moule 13, par exemple la partie d'éjection 135, contre une épaisseur de la pièce 15. Une telle étape est par exemple illustrée figure 5.

Le procédé peut comprendre une ou plusieurs étapes de refroidissement.

Après injection, pendant que le moule est fermé, le procédé peut comprendre une étape de refroidissement de la matière injectée par le moule fermé, par exemple par la partie externe 131 et la partie interne 133. Le refroidissement a par exemple lieu avant l'étape 902 de déplacement de la partie d'injection et/ou pendant l'étape 902 de déplacement de la partie d'injection et/ou postérieurement à l'étape 902, par exemple avant l'étape 905.

Après l'étape 9051, après le dégagement de la partie interne 133, le procédé peut comprendre une étape 906 de refroidissement de la partie interne 133 par convection, par exemple par convection avec l'air. L'étape 906 est par exemple mise en oeuvre au moins partiellement en même temps que l'étape 907 d'éjection et/ou que l'étape 9052 de dégagement de la partie externe 131. L'étape 906 peut comprendre en outre le refroidissement de la partie interne 133 par conduction, par exemple au moyen du caloduc de la partie interne 133.

Le procédé peut comprendre une étape de refroidissement par conduction et/ou par le circuit de refroidissement, par exemple au cours d'une ou de plusieurs des 901 à 907. Le refroidissement

La succession d'étapes décrites ci-avant peut former un cycle de production de pièce. Le procédé peut comprendre une ou plusieurs répétition(s) du cycle, par exemple pour produire en série des pièces 15.

De la même manière il est décrit un procédé de fabrication successive de pièces comprenant plusieurs répétitions du procédé décrit ci-avant.

## Revendications

1. Procédé de fabrication de pièces en polymère, le procédé comprenant les étapes suivantes :
- injection (901) de matière par une partie d'injection (11) de matière dans un moule (13) en position fermée de sorte à former au moins une pièce (15), la partie d'injection étant connectée au moule fermé,
- après injection, déplacement (902) de la partie d'injection par rapport au moule, une partie externe (31) du moule étant maintenue en contact avec la pièce formée par injection pour refroidir la pièce lors du déplacement de la partie d'injection, et
- après déplacement, ouverture (905) du moule, comprenant :
∘ dégagement (9051) d'une partie interne du moule, de sorte à permettre le refroidissement de la partie interne, et
∘ dégagement (9052) de la partie externe,
le dégagement de la partie externe débutant postérieurement au dégagement de la partie interne.

2. Procédé selon la revendication 1, dans lequel le moule reste fermé lors du déplacement de la partie d'injection.

3. Procédé selon l'une quelconque des revendications précédentes, comprenant en outre une étape d'éjection de la pièce postérieurement au dégagement de la partie interne et au dégagement de la partie externe, l'éjection ayant lieu par appui d'une partie d'éjection du système contre une épaisseur de la pièce.

4. Procédé selon l'une quelconque des revendications 1 à 3, dans lequel le dégagement de la partie externe est plus lent que le dégagement de la partie interne.

5. Procédé selon la revendication 4, dans lequel la vitesse de dégagement de la partie externe (131) est inférieure à la vitesse de dégagement de la partie interne (133) d'au moins 50%, par exemple d'au moins 60 %, par exemple d'au plus 90%.

6. Procédé selon l'une quelconque des revendications précédentes, dans lequel l'étape de dégagement (9052) de la partie externe comprend la mise en contact de la pièce (15) par une cale.

7. Procédé selon la revendication 6, dans lequel la cale est une cale mobile qui reste, durant l'étape de dégagement (9052) de la partie externe, en contact avec la pièce (15) jusqu'à ce que plus de 50% de la surface externe de la pièce (15) qui est en contact avec la partie externe (131) lorsque le moule (13) est en position fermée, ne soit plus en contact avec la partie externe (131).

## Patentansprüche

1. Verfahren zum Herstellen von Werkstücken aus Polymer, wobei das Verfahren die folgenden Schritte umfasst:
- Einspritzen (901) von Material durch ein Materialeinspritzteil (11) in eine Form (13) in geschlossener Position, um mindestens ein Werkstück (15) zu formen, wobei das Einspritzteil mit der geschlossenen Form verbunden ist,
- nach dem Einspritzen, Bewegen (902) des Einspritzteils im Verhältnis zur Form, wobei ein äußerer Teil (31) der Form in Kontakt mit dem durch Einspritzen geformten Werkstück gehalten wird, um das Werkstück während des Bewegens des Einspritzteils zu kühlen, und
- nach dem Bewegen, Öffnen (905) der Form, das Folgendes umfasst:
∘ Lösen (9051) eines inneren Teils der Form, um das Kühlen des inneren Teils zu ermöglichen, und
∘ Lösen (9052) des äußeren Teils,
wobei das Lösen des äußeren Teils nach dem Lösen des inneren Teils beginnt.

2. Verfahren nach Anspruch 1, wobei die Form beim Bewegen des Spritzteils geschlossen bleibt.

3. Verfahren nach einem der vorhergehenden Ansprüche, das ferner einen Schritt des Auswerfens des Werkstücks nach dem Lösen des inneren Teils und dem Lösen des äußeren Teils umfasst, wobei das Auswerfen erfolgt, indem ein Auswurfteil des Systems gegen eine Dicke des Werkstücks gedrückt wird.

4. Verfahren nach einem der Ansprüche 1 bis 3, wobei das Lösen des äußeren Teils langsamer erfolgt als das Lösen des inneren Teils.

5. Verfahren nach Anspruch 4, wobei die Lösegeschwindigkeit des äußeren Teils (131) um mindestens 50 %, zum Beispiel um mindestens 60 %, zum Beispiel um höchstens 90 %, geringer ist als die Lösegeschwindigkeit des inneren Teils (133).

6. Verfahren nach einem der vorhergehenden Ansprüche, wobei der Schritt des Lösens (9052) des äußeren Teils das Inkontaktbringen des Werkstücks (15) mit einem Keil umfasst.

7. Verfahren nach Anspruch 6, wobei der Keil ein beweglicher Keil ist, der während des Schritts des Lösens (9052) des äußeren Teils in Kontakt mit dem Werkstück (15) bleibt, bis mehr als 50 % der Außenfläche des Werkstücks (15), die in Kontakt mit dem äußeren Teil (131) steht, wenn sich die Form (13) in der geschlossenen Position befindet, nicht mehr in Kontakt mit dem äußeren Teil (131) steht.

## Claims

1. Method of manufacturing polymeric parts, the method comprising the following steps:
- injection (901) of material by a material injection part (11) into a mould (13), the mould being in a closed position, so as to form at least one part (15), the injection part being connected to the closed mould,
- after injection, displacement (902) of the material injection part relative to the mould, an outer part (31) of the mould being held in contact with the part formed by injection to cool the part during displacement of the injection part, and
- after displacement, opening (905) of the mould, comprising:
∘ release (9051) of an inner part of the mould, so as to allow the inner part to cool, and
∘ release (9052) of the outer part,
wherein release of the outer part begins after release of the inner part.

2. Method according to claim 1, wherein the mould remains closed during displacement of the material injection part.

3. Method according to any one of the preceding claims, further comprising a step of ejecting the part after release of the inner part after release of the outer part, the ejection taking place by pressing an ejection part of the system against a thickness of the part.

4. Method according to any one of claims 1 to 3, in which the release of the outer part is slower than the release of the inner part.

5. Method according to claim 4, in which the rate of release of the outer part (131) is less than the rate of release of the inner part (133) by at least 50%, for example by at least 60%, for example by at most 90%.

6. Method according to any one of the preceding claims, wherein the step of releasing (9052) the outer part comprises bringing the part (15) into contact with a wedge.

7. Method according to claim 6, wherein the wedge is a movable wedge which remains, during the step of releasing (9052) the outer part, in contact with the part (15) until more than 50% of the external surface of the part (15) which is in contact with the outer part (131) when the mould (13) is in the closed position, is no longer in contact with the outer part (131).
